# FASCICULE DE BREVET EUROPEEN

(11) **EP 2 135 305 B1**
(45) Date de publication et mention de la délivrance du brevet: **11.01.2012**
(21) Numéro de dépôt: 08787781.7
(22) Date de dépôt: 12.03.2008
(51) Int. Cl.: H01L 41/09

(54) **SYSTÈME DE POSITIONNEMENT FIN PAR MOTEUR INERTIEL À BASE D'AMPLIFICATEUR MÉCANIQUE**
FEINEINSTELLUNGSSYSTEM MIT TRÄGHEITSMOTOR AUF DER BASIS EINES MECHANISCHEN VERSTÄRKERS
FINE POSITIONING SYSTEM USING AN INERTIAL MOTOR BASED ON A MECHANICAL AMPLIFIER

(30) Priorité: 14.03.2007 FR 0701822
(43) Date de publication de la demande: 23.12.2009
(73) Titulaire: Cedrat Technologies, 38240 Meylan (FR)
(72) Inventeur: CLAEYSSEN, Frank, F-38240 Meylan (FR); BARILLOT, François, F-38420 Le Versoud (FR)
(74) Mandataire: Hecké, Gérard
(86) Numéro de dépôt international: PCT/FR2008/000323
(87) Numéro de publication internationale: WO 2008/132337

(56) Documents cités:
- EP-A2- 0 720 245
- FR-A- 2 850 218
- GB-A- 2 369 489
- US-A1- 2002 033 322
- US-A1- 2005 258 712

## Description

### Domaine technique de l'invention

L'invention concerne des systèmes de positionnement précis comprenant :
- un premier sous-ensemble inertiel incluant au moins un élément piézoactif, et au moins un point d'inertie, et capable de produire en un point d'actionnement des forces d'impact et des déplacements dans une direction d'actionnement,
- un deuxième sous-ensemble entraînement relatif incluant au moins un élément entraîneur et un élément entraîné, l'un des deux éléments étant fixé au premier sous-ensemble inertiel par le point d'actionnement,
- un circuit électronique permettant d'alimenter chaque élément piézoactif du premier sous-ensemble inertiel suivant des cycles d'excitation prédéterminés.

### État de la technique

Les moteurs inertiels piézoélectriques sont utilisés dans les applications de micro motorisation linéaires ou rotatives de précision, par exemple en optique pour des fonction de focalisation ou en microscopie pour le micro positionnement d'échantillons.

Le concept du moteur inertiel piézoélectrique est décrit par exemple dans le brevet EP0292989 de T. Higuchi. Un élément piézoélectrique 11 est placé solidairement entre deux éléments de masses M noté 12, et m noté 13, ces trois éléments formant un ensemble mobile. La masse m est toujours libre. La masse M est en contact glissant avec frottement avec un guide 14, servant de référence fixe. L'élément piézoélectrique est excité suivant des cycles d'excitation asymétrique, typiquement par une tension variable en dents de scie.

Une commutation rapide de tension appliquée à l'élément piézoélectrique appliqué pendant une durée t₁ provoque sa déformation rapide et donc un déplacement rapide de ses extrémités, qui engendre une force d'impact provoquant un glissement de la masse M par rapport au guide compte tenu de l'inertie de la masse m. Cette phase est appelée phase de glissement. En commutant lentement la tension à sa valeur initiale sur une durée t₂, une déformation lente de l'élément piézoélectrique est produite conduisant au déplacement de la masse m sans déplacement de la masse M, l'inertie de la masse m ne jouant plus et le frottement du guide sur la masse M jouant le rôle d'un frein assurant un blocage. Cette phase est appelée phase d'adhérence. Sur un cycle d'excitation asymétrique, un mouvement relatif de la masse M et donc de l'ensemble mobile est ainsi obtenu par rapport au guide et constitue un pas élémentaire. En répétant ce cycle glissement - adhérence, un fonctionnement en pas à pas est obtenu permettant de réaliser des courses longues et très supérieures à un pas élémentaire.

Pour obtenir le fonctionnement souhaité, les temps de commutation t₁ du mouvement rapide et t₂ du mouvement lent sont déterminants. Les notions de « lent » et « rapide » sont fixées par rapport à la période propre du sous-système formé par la masse m et la raideur k de l'élément piézoélectrique. Cette période propre T, inverse de la fréquence de résonance fᵣ de ce sous-système, est définie suivant la formule T = 1 / fᵣ = 2 π (m/k)^{1/2}. Avec un temps de commutation t₁ de la tension qui est inférieur à la période propre T, l'inertie de la masse m intervient et le sous-système formé par la masse m et la raideur k fonctionne comme un générateur de force d'impact s'appliquant sur M, capable de l'accélérer et de l'entraîner. Ce critère fixe le choix de temps t₁ < T. Avec un temps de commutation t₂ de la tension qui est nettement supérieur à la période propre T, l'inertie de la masse m ne joue plus et le sous-système formé par la masse m et la raideur k fonctionne comme un générateur de déplacement n'entraînant que m. Ce critère fixe le choix de temps t₂> T.

Avec les structures proposées et compte tenu des raideurs k élevées des éléments piézo, les fréquences de résonance fᵣ sont élevées et, en pratique se situent au-dessus de 10kHz. La période est alors supérieure à T =100µs, et donc t₁ doit être inférieur à 100 µs. Dans le cas du brevet EP0292989, les valeurs utilisées sont t₁ = 50µs et t₂= 2ms et respectent le critère t₁ < T < t₂.

Un concept très similaire est présenté dans le brevet EP 0464 764 A1 de Saito Schuichiro. Les éléments 17, 12 et 13 de ce brevet correspondent respectivement dans le brevet EP0292989 à la masse M soit l'élément 12, l'élément piézoélectrique 11, et la masse m, soit l'élément 13. Ils forment un sous ensemble en mouvement relatif par rapport à l'élément 1, en contact glissant avec frottement avec 17, comme 12 l'est part rapport à 14 dans EP0292989. La différence est que le sous-ensemble 17, 12 et 13 est supposé fixe et que l'élément 1 devient l'élément mobile.

Ce type de mécanisme offre aussi un mode de positionnement fin qui peut se combiner au mode de positionnement à longue course. Par exemple dans le cas du brevet EP0292989 de Higuchi, le mode de positionnement fin est possible en fixant la charge à entraîner sur la masse m. Une déformation quasi statique de l'élément piézoélectrique réalisée en maintenant la tension électrique, permet de positionner la charge fixée sur la masse m avec une bonne résolution. La course maximale uₘₐₓ est déterminée par la déformation maximale admissible Sₘₐₓ et par la longueur de l'élément piézoélectrique L, par la relation uₘₐₓ = L.Sₘₐₓ. Avec une longueur typique de céramique piézoélectrique L=1 0mm et une déformation Sₘₐₓ= 0.1 % , typiquement la course maximale est uₘₐₓ=10µm.

Ces mécanismes présentent plusieurs inconvénients :
Les courants nécessaires pour alimenter l'élément piézoélectrique en déformation rapide sont élevés, à cause notamment des temps de commutation très brefs nécessaires pour exploiter l'effet d'inertie et produire la force d'impact.
Le brevet EP0292989 donne des conditions typiques de fonctionnement : Un temps de commutation t₁=50µs pour faire varier la tension de V=150V sur une capacité C=5µF. Cela conduit à un courant électrique d'intensité I = C.V/ t₁ = 15A. Ce courant élevé, dû au temps de commutation court t₁ nécessaire pour les déformations rapides, sollicite l'électronique, et provoque des échauffements dans les soudures et les électrodes des éléments piézoélectriques. Il est une source de défaillance pour le système.

Du point de vue de la structure mécanique, l'élément piézoélectrique doit être maintenu rigidement en contact avec les éléments de masses m et M. Un élément piézoélectrique présente naturellement un interface plat, sans filetage qui, sans mécanisme additionnel, ne permet qu'un collage entre les éléments. Un tel collage est sujet à vieillissement conduisant à terme à une perte de cohérence entre l'élément piézoélectrique et les éléments de masses m et M. A cause des collages, cette structure mécanique comporte des sources de défaillance.

L'élément piézoélectrique est mis en oeuvre sans précontrainte mécanique. Pour éviter les sur-contraintes de tension mécanique engendrant fracture par délamination, il est nécessaire de limiter les amplitudes de déformation de l'élément piézoélectrique. Cela conduit à limiter la taille des pas et incidemment la vitesse et donc de réduire les performances du moteur ou dans le cas contraire, à réduire la durée de vie du mécanisme.

Sur le plan fonctionnel, le fait d'exciter le moteur avec des déformations brusques et lentes, a aussi pour conséquence d'exciter des modes de structure et d'induire des vibrations. Ces vibrations perturbent les fonctions de positionnement précis du moteur et peuvent être aussi des sources de défaillance ou de perturbations limitant les vitesses, si elles ne sont pas maîtrisées.

Enfin, la course de positionnement fin est limitée à une dizaine de microns sauf à considérer des éléments piézoélectriques de grandes longueurs conduisant à des structures irréalistes en terme d'encombrement. Une telle course ne permet pas de répondre à des besoins de course d'un ordre de grandeur plus important.

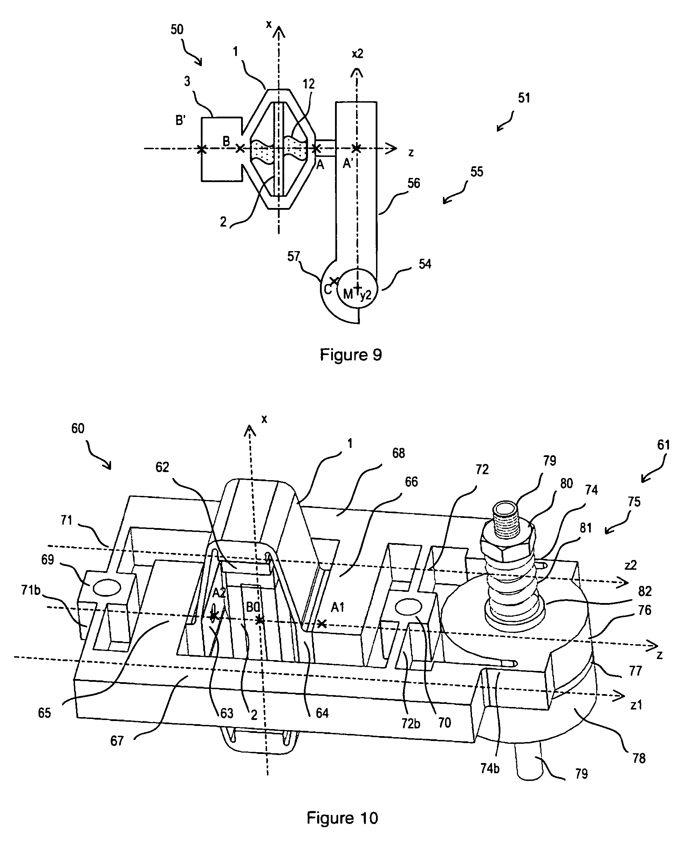

Le document FR 2850218 décrit un actionneur piézo amplifié fixé rigidement à un élément entraîné. Il ne décrit pas de pince et d'élément pincé pour autoriser le glissement et l'adhérence d'un élément entraîné. Il ne constitue pas de moteur inertiel. Dans le cas de la figure 10, l'élément entraîné formé par le porte miroir, est fixé rigidement au sous ensemble inertiel par des vis, qui ne permettent pas le mouvement de glissement - adhérence. Dans le cas de la figure 15, l'élément entraîné constitué par la structure 46, est fixé rigidement au sous ensemble inertiel par la liaison 28, qui ne permet pas le mouvement glissement - adhérence.

Le document EP 720245 divulgue un moteur piézoélectrique de type marcheur à deux jambes Selon les figures 3 et 5, chaque jambe est composée d'une céramique piézo (30, 30') et d'un convertisseur (26, 26') de mouvement de translation de la céramique piézo en un petit mouvement de rotation. Le fonctionnement du moteur est basé sur un séquentiel d'excitation des deux piézos, nécessitant un déphasage entre les commandes des deux céramiques piézo. Il ne produit pas de forces d'impact pour son fonctionnement. La céramique 30, 30' ne comporte pas de moyen de précontrainte, tel qu'il serait souhaitable pour exploiter des effets dynamiques et pour produire des forces d'impact dans des conditions fiables. Il ne s'agit donc pas d'un moteur inertiel basé sur des forces d'impact.

Les documents US 2005/0258712 et US 2002/0033322 décrivent des moteurs piézo inertiels, exploitant des forces d'impacts, du type mentionné dans la demande de brevet EP0292989 précitée. Ces moteurs font appel à des forces produites par un élément piézo pour faire glisser un élément mené dans une pince. Plus les forces produites par l'élément piézo sont élevées, plus le glissement sera obtenu facilement, et meilleures seront les performances. Pour cette raison, l'amplification de déplacement de l'élément piézo dans un moteur piézo inertiel n'est pas suggérée par ces brevets, car par principe, une amplification de déplacement s'accompagne d'une dés-amplification des forces de l'élément piézo. Il en résulte qu'une amplification de déplacement n'apporte a priori pas de gains globaux en performances mécaniques dynamiques (force, vitesse du moteur). Les gains apportés par une amplification de déplacement ne se situent donc pas en premier lieu sur les performances mécaniques dynamiques.

### Objet de l'invention

L'invention a pour but de remédier à ces inconvénients et, plus particulièrement, d'améliorer les performances et la fiabilité de moteurs inertiels piézoactifs.

Selon l'invention, le premier sous-ensemble inertiel comporte un amplificateur mécanique amplifiant les déplacements de l'élément piézoactif, le point d'actionnement étant situé sur l'amplificateur mécanique, sans venir en engagement direct avec l'élément piézoactif. L'élément entraîneur et l'élément entraîné sont conformés selon au moins une pince et un élément pincé pour autoriser un mouvement de glissement adhérence.

Une telle structure permet d'allonger le temps de commutation rapide de manière à réduire notablement les intensités des appels de courants électriques, et à augmenter les courses de positionnement fin, et de réduire la masse de contre-masse.

Selon un développement de l'invention, l'amplificateur mécanique assure la liaison mécanique entre les masses m et M par des liaisons rigides et le maintien mécanique de l'élément piézoélectrique.

Selon un autre développement de l'invention, l'amplificateur mécanique intègre des éléments amortissant afin de réduire les amplitudes de vibrations provoquées par l'excitation du moteur ou par des sources externes et d'augmenter la vitesse du moteur.

Selon un autre développement de l'invention, l'amplificateur mécanique assure une précontrainte de l'élément piézoélectrique.

Selon un mode de réalisation particulier, le sous ensemble formé par l'élément piézoélectrique et l'amplificateur mécanique est utilisé pour réaliser des moteurs linéaires.

Selon un autre mode de réalisation particulier, le sous ensemble formé par l'élément piézoélectrique et l'amplificateur mécanique est utilisé pour réaliser des moteurs rotatifs.

Selon un développement de l'invention, le circuit électronique du moteur permet des modes de positionnement grande course, de positionnement fin et de positionnement dynamique.

Selon un mode de réalisation particulier permettant d'obtenir des vitesses plus élevées dans le mode de positionnement grande course, le circuit électronique assure une synchronisation entre la commutation rapide du cycle d'excitation et un maximum de la vibration résiduelle du sous ensemble inertiel.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 présente un schéma de moteur inertiel linéaire comprenant un amplificateur mécanique.
La figure 2 présente le schéma temporel de la course de la charge obtenu suivant les 3 modes possibles : M1 : Mode grande course, par accumulation de pas de taille variable ; M2 : Mode de positionnement fin, par déformation quasi statique ; M3 : Mode de positionnement dynamique, par déformation dynamique.
La figure 3 présente un schéma de moteur inertiel linéaire à base d'amplificateur mécanique avec guidage de la contre-masse et pince flottante.
La figure 4 présente une vue en perspective de moteur inertiel linéaire à base d'amplificateur mécanique avec guidage de la contre-masse et pince flottante
La figure 5 présente une vue en perspective d'un second moteur inertiel linéaire à base d'amplificateur mécanique avec guidage de la contre-masse et pince flottante
La figure 6 présente une vue en perspective d'une platine inertielle linéaire à base d'amplificateur mécanique.
La figure 7 présente un schéma de moteur inertiel linéaire à base d'amplificateur mécanique et à pince sur l'arbre.
La figure 8 présente un schéma d'électrovanne linéaire à moteur inertiel linéaire à base d'amplificateur mécanique.
La figure 9 présente un schéma de moteur inertiel rotatif linéaire à base d'amplificateur mécanique.
La figure 10 présente une vue en perspective d'un moteur inertiel rotatif à base d'amplificateur mécanique.
La figure 11 présente une vue en perspective d'un moteur inertiel rotule à base de 4 amplificateurs mécaniques.
La figure 12 présente un schéma de système d'alimentation et de contrôle pour à moteur inertiel à base d'amplificateur mécanique.

### Description de modes particuliers de réalisation

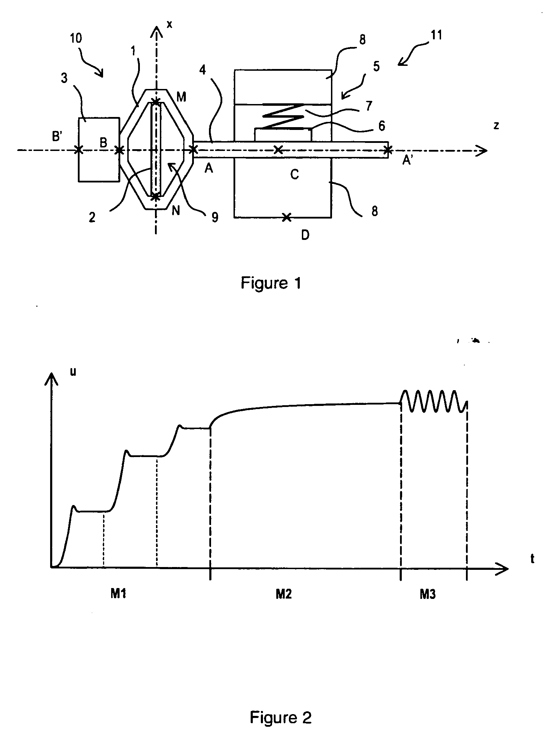

En référence à la figure 1, le moteur inertiel comporte un premier sous-ensemble inertiel 10 constitué d'un amplificateur mécanique 1, d'un élément piézoactif 2 et d'une contre-masse 3, et un deuxième sous-ensemble entraînement relatif 11 comprenant notamment une pince 5 et un élément pincé en forme d'arbre 4 orienté suivant l'axe z. La pince 5 est formée d'un patin 6 en contact glissant avec l'arbre 4 vers le point C et d'un système de précharge élastique 7 fixé au bâti 8. Le système 7 est destiné à produire une force statique F perpendiculaire à l'axe z. Si le point D est fixe, la charge à entraîner en mouvement relatif peut être fixée soit vers le point A ou dans son prolongement A' sur l'arbre 4 soit vers le point B ou sur la contre-masse vers B'. Si le point B est fixe, la charge à entraîner peut être fixée vers le point D.

La pince 5 et l'élément pincé 4 peuvent être remplacés par tout autre type d'élément entraîneur et d'élément entraîné.

L'amplificateur mécanique 1 présente un point d'actionnement A et un point d'inertie B. L'amplificateur mécanique 1 est basé sur une structure en coquille contenant l'élément piézoactif 2. Cette structure en coquille présente par exemple une forme approximativement en losange. La dimension de l'amplificateur dₓ suivant l'axe x entre les points M et N est inférieure à sa dimension d_{z} entre les points A et B suivant la direction z. Une extension de l'élément piézoélectrique 2 s'allongeant suivant la direction x déforme l'amplificateur 1 ce qui provoque une contraction de l'amplificateur 1 suivant l'axe z. A cause de la géométrie de l'amplificateur et du rapport dₓ/d_{z}>1, la contraction suivant z est amplifiée d'un rapport d'amplification α voisin de dₓ/d_{z}. Ce type de mécanisme d'amplification est décrit dans le brevet FR 2740276. Les rapports d'amplification peuvent varier de 1 à 100 par la conception de l'amplificateur, mais typiquement ils se situeront entre 3 et 20. La forme de la coquille de l'amplificateur 1 peut être différente, par exemple en forme d'ellipse, d'anse de panier ou d'os de chien, et peut présenter ou non des articulations élastiques en flexion. Ces formes variées permettent de faire varier l'encombrement et les performances de l'amplificateur 1 suivant les besoins.

L'amplificateur mécanique 1 est réalisé à l'aide d'un matériau métallique tel que de l'acier, d'un matériau plastique ou d'un matériau composite par exemple à base de fibres de carbone. L'amplificateur mécanique 1 décrit dans le brevet FR 2740276 permet par montage et grâce à son élasticité, l'application d'une précontrainte sur les éléments piézoactifs 2, ce qui maintient chaque élément piézoactif et évite son passage en tension mécanique. Il offre des interfaces mécaniques aux points A et B tels que des trous permettant une bonne liaison mécanique avec la contre-masse 3 et l'arbre 4.

Le point A et la direction z sont respectivement le point d'actionnement et la direction d'actionnement du sous ensemble inertiel 10.

La contre masse 3 est un corps rigide fixé au point d'inertie B de l'amplificateur 1.

Une autre forme de réalisation du sous-ensemble inertiel amplifié consiste à réaliser l'amplificateur 1, la contre-masse 3 et l'arbre 4 en une seule pièce monolithique, ce qui réduit les coûts de fabrication et élimine les problèmes de liaison entre ces pièces.

L'élément piézoactif 2 est typiquement un empilement en céramique piézoélectrique se déformant longitudinalement suivant l'axe x. La déformation maximal avec les céramiques piézoélectriques multicouches est de l'ordre de Sₘₐₓ =0,1%. Avec une longueur L=10mm de céramique, l'extension maximale de la céramique est de 10µm. Le même effet pourrait être réalisé avec une ou plusieurs céramiques piézoélectriques massives, des céramiques électrostrictives, des polymères électroactifs ou un barreau en alliage magnétostrictif ou à mémoire de forme magnétique, dont la mise en oeuvre est complétée par un bobinage d'alimentation et un circuit magnétique. L'élément piézoactif 2 peut être complété par un mécanisme à rattrapage de jeu tel que des cales à rampes, comme décrit dans le brevet FR 2740276. Ce mécanisme placé le long de l'axe x permet de rattraper les jeux éventuels entre l'élément piézoactif 2 et l'amplificateur 1 et de faciliter le réglage de la précontrainte produite par l'amplificateur mécanique 1 sur l'élément piézoactif 2. L'amplificateur 1, l'élément piézoactif 2, la contre-masse 3 et les éventuels matériaux amortissant placés à la surface de l'amplificateur ou dans le complémentaire 9 forment le sous-ensemble inertiel 10.

La pince 5 du deuxième sous-ensemble entraînement relatif 11 est réalisée sur la figure 1 par un patin 6, et un système de précharge élastique 7. Celui ci permet de rattraper les jeux d'usure du patin 6 dus aux frottements entre le patin 6 et l'arbre 4, formant l'élément pincé. L'arbre 4 peut être cylindrique ou à section rectangulaire. Pour limiter les problèmes de dilatation différentiée, le matériau de l'arbre 4 sera choisi de même nature que celle de la pince 5, par exemple en acier. Pour améliorer les performances du moteur, il est préférable de traiter les interfaces des zones de contact situées à l'interface du patin 6 et de l'arbre 4 ou de déposer des couches de matériau sur ces zones, offrant un coefficient de frottement adéquat et un taux d'usure faible.

Hors alimentation, le moteur est bloqué en position par la force de pré-charge F appliquée suivant la direction perpendiculaire à la zone de contact située autour du point C par la pince 5 sur l'arbre 4.

En fonctionnement, un mouvement relatif selon z du sous-ensemble inertiel 10, notamment des points A et B par rapport au point D est obtenu par glissement - adhérence, à partir de cycles d'excitation asymétriques formés de déformations rapides et lentes de l'amplificateur mécanique 1, dues à celle de l'élément piézoélectrique 2 et à l'alimentation électrique de cet élément. Par exemple, si D est fixe, une contraction lente de l'amplificateur provoque un déplacement du point B et de la contre-masse 3 tandis que le point A et l'arbre 4 sont fixes. Un allongement rapide de l'amplificateur 1 génère une force d'impact suivant z et provoque un déplacement du point A et de l'arbre 4 par glissement dans la pince 5. Après un cycle d'une contraction lente et d'un allongement rapide, un petit pas positif suivant z est obtenu. Symétriquement, après un cycle formé d'une contraction rapide et d'un allongement lent, un petit pas négatif suivant z est obtenu. Un mode M1 de positionnement grande course est réalisée suivant la figure 2 par accumulation de tels petits pas obtenus ainsi par glissement adhérence. Des pas de taille réduite et ajustable peuvent être réalisés en réduisant la tension de commande. Pour obtenir le fonctionnement souhaité, les temps de commutation t₁ du mouvement rapide et t₂ du mouvement lent sont déterminants. Les notions de « lent » et « rapide » sont fixées par rapport à la période propre T du sous-système formé, dans ce moteur, par la masse m de la contre masse 3, la raideur k de l'élément piézoactif 2 et le rapport d'amplification α de l'amplificateur 1. Cette période propre T, inverse de la fréquence de résonance fᵣ de ce sous-système, est définie en fonction de ces trois contributions suivant la formule T = 1/ fᵣ = 2.π.α.(m/k)^{1/2}. Le rapport d'amplification α étant supérieur à 1, il permet d'allonger significativement la période propre T. Ceci permet incidemment d'augmenter dans les mêmes proportions le temps de commutation t₁ du mouvement rapide et de réduire les intensités de courants I=C.V/ t₁. Pour une raideur k de matériau piézoactif identique et une masse m identique, l'utilisation d'un amplificateur par exemple de rapport α =10 permet de réduire l'intensité de l'appel de courant d'un facteur 10. Considérant des valeurs initiales de I=15A, l'utilisation d'un tel amplificateur ramène l'appel de courant à la valeur de 1.5A, ce qui est beaucoup plus supportable pour les composants électroniques de l'alimentation, les soudures et les électrodes des éléments piézoactifs. Cela rend aussi l'électronique plus simple à réaliser. A noter que la charge électrique totale Q=I.t₁ fournie à chaque commutation n'est pas modifiée par l'amplification. L'amplificateur mécanique permet donc de mieux répartir la charge dans le temps sans réduire l'énergie électrique totale fournie à chaque cycle.

L'amplification mécanique permet aussi de réduire sensiblement la masse de la contre-masse, ce qui est avantageux pour miniaturiser le mécanisme et réduire sa masse. La période propre T peut en effet s'écrire T = 1/fᵣ = 2.π.(α2.m'/k)^{1/2}= 2.π.(M_{eq}/k)^{1/2} avec M_{eq}=α².m'. L'amplification permet de choisir une masse de contre-masse m'= M_{eq}/α² , qui donnerait la même période propre T que celle d'un système basé sur une masse de contre-masse M_{eq} mais sans amplificateur. Avec α =10 la masse de contre-masse est ainsi réduite par un facteur 100, à période propre T identique pour un mécanisme sans amplificateur. Compte tenu de cette possibilité et de la masse de l'amplificateur 1, la contre-masse 3 peut être omise dans une forme de réalisation simplifiée. Dans ce cas, la masse de la partie de l'amplificateur située vers le point B joue le rôle de contre-masse dans le mode de fonctionnement en glissement adhérence. Des compromis intermédiaires sont possibles, permettant de partager les gains sur le courant et sur la masse de contre-masse.

Le mode M2 de positionnement fin suivant la direction z est possible dans les configurations particulières où la charge est fixée sur la contre-masse 3 vers les points B ou B' et où le bâti 8 vers le point D est fixe, ou bien dans le cas où la charge est fixée sur bâti 8 vers le point D et où la contre-masse 3 vers les points B ou B' est la masse mécanique. Ces configurations ont de plus l'avantage d'autoriser des charges dont la masse est non négligeable devant celle à la quelle elle est attachée. Le positionnement fin est obtenu par une déformation quasi statique de l'amplificateur mécanique et de l'élément piézoélectrique, sans glissement de l'arbre dans la pince. La course maximale uₘₐₓ de positionnement fin est déterminée par la déformation maximale admissible Sₘₐₓ, par la longueur de l'élément piézoélectrique L, et l'amplification mécanique α, suivant la relation uₘₐₓ = α.L.Sₘₐₓ. Avec L=10mm, Sₘₐₓ =0,1% et α = 10, on obtient une course de positionnement fin uₘₐₓ = 100µm. Cette course 10 fois plus grande que sans amplificateur devient suffisamment importante pour assurer des fonctions de positionnement fin d'optiques.

Un mode M3 de mouvement dynamique à grande bande passante et course réduite suivant la direction z est aussi disponible dans ces configurations. Tant que les efforts dynamiques associés à l'arbre restent inférieurs au seuil de glissement de la pince, la pince 5 agit comme un point de fixation, et les déformations dynamiques d'amplificateur sont transmises sous forme de déplacement à la charge. Ce mode est superposable au mode de positionnement fin. Il permet par exemple de faire vibrer un échantillon après l'avoir positionné. Cette fonction est utile par exemple dans certaines expériences de diffraction en rayon X.

Pour réduire les vibrations de la charge ou du bâti, ce qui est souhaité dans les applications optiques où la stabilité en position est importante, il est avantageux de mettre en oeuvre un matériau amortisseur tel qu'un élastomère, agissant en relation avec l'amplificateur 1 ou l'élément piézoactif 2, comme décrit dans le brevet US 6927528. Un effet amortissant maximum avec obtenu lorsque l'élastomère remplit la cavité 9 à l'intérieur de l'amplificateur 1. Un tel élastomère remplissant la cavité 9 permet de plus de protéger l'élément piézoélectrique 1, par exemple de l'humidité ou de chocs venant de pièces externes. L'amortissement du mode du sous ensemble inertiel 10 permet de plus d'augmenter la vitesse du moteur. En effet, à chaque commutation rapide, le mode de vibration du sous ensemble inertiel 10 de période T est excité ce qui produit une vibration résiduelle de type sinus amorti. L'amortisseur 12 permet de réduire la durée de cette vibration résiduelle. La durée t₂ et donc la durée des cycles d'excitation Tₑ = t₁+t₂ peuvent ainsi être réduites. La fréquence d'excitation fₑ = 1/Tₑ de réalisation de chaque pas est donc augmentée ce qui augmente la vitesse moyenne du moteur.

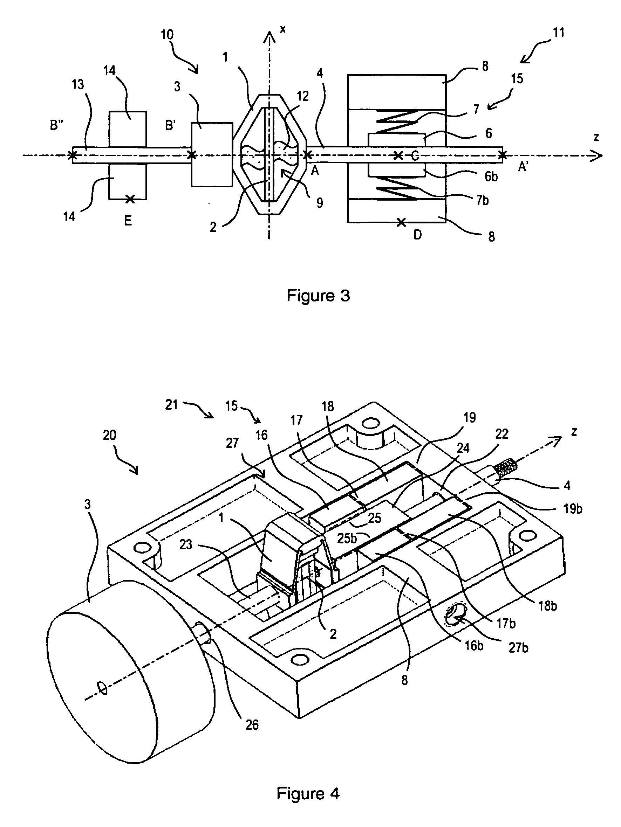

La figure 3 présente une seconde variante du moteur de la figure 1. Le sous-ensemble mécanisme inertiel 10 comporte l'amplificateur mécanique 1, l'élément piézoactif 2, la contre-masse 3 et un élastomère 12 remplissant partiellement la cavité 9 pour apporter de l'amortissement. Un moyen de guidage est réalisé au niveau de la contre-masse 3. Ce moyen peut être réalisé par exemple avec un arbre 13 et un palier lisse 14. Une autre réalisation peut consister en un guidage élastique de la masse 3. Une pince flottante 15 est mise en oeuvre pour symétriser les raideurs de précharge et les forces de précharge F s'exerçant perpendiculairement à la direction z sur l'arbre 4. La pince flottante 15 est réalisée par exemple avec deux patins 6, 6b et deux ressorts de précharge 7, 7b. De la même façon, la pince flottante 15 peut être réalisée avec plus de deux patins et ressorts de précharge, répartis de manière à symétriser les raideurs de précharge et les forces de précharge F. Dans cette configuration, le point E peut être relié au point D pour solidariser le guide 14 et le bâti 8. Si ces éléments forment la référence fixe, la charge à entraîner peut être fixée au niveau des points A, B' ou B". Si le point B" est la référence fixe, la charge peut être fixée en D. L'intérêt de cette configuration est de permettre à la pince 15 de réaliser la fonction de génération de force de frottement F sans avoir à réaliser toutes les fonctions de guidage. Par exemple, il peut être avantageux de réaliser l'arbre 4 sous forme d'une lame à section rectangulaire prise en sandwich dans la pince 15 par deux patins 6, 6b pressés contre l'arbre 4 par deux éléments ressorts 7, 7b comme présenté en figure 4. Les patins dans ce cas peuvent avoir une grande surface de contact en jouant sur une grande hauteur dans la troisième direction. Ils réalisent un guidage apparenté à une liaison appui plan. Les faces en vis à vis de la lame et des patins autorisent le dépôt de couches de frottement appropriées. Pour compléter le guidage, l'arbre 13 peut alors être un arbre cylindrique, en liaison pivot glissant avec le guide 14. Une charge fixée en B" serait ainsi guidée de façon précise suivant z. Le fonctionnement de ce moteur est identique à celui de la figure 1. L'alimentation électrique de l'élément piézoélectrique 2 de manière à produire des cycles de déformations rapides et lentes de l'amplificateur mécanique 1 permet, par accumulation de pas, d'obtenir une course longue entre le sous ensemble inertiel 10 et le bâti 8.

La figure 4 présente une forme de réalisation particulière du moteur inertiel à amplificateur mécanique suivant la figure 3. Le mécanisme d'entraînement inertiel 20 comporte un amplificateur 1 contenant des matériaux piézoactifs 2, et une contre masse 3 reliée à l'amplificateur 1 par le biais de l'arbre 23. L'amplificateur 1 se présente sous forme d'une coquille de forme approximativement elliptique présentant des interfaces mécaniques externes sur le petit axe et des interfaces mécaniques internes sur le grand axe. Entre ces interfaces mécaniques internes de l'amplificateur 1 sont placés sous précontrainte une céramique piézoélectrique et un mécanisme à rattrapage de jeu à base de cales. Les interfaces externes de l'amplificateur 1 comportent un méplat et un trou fileté permettant une fixation mécanique fiable de l'arbre 23 et de l'arbre 4. Le sous-ensemble entraînement relatif 21 est formé de la pince flottante 15 et de l'arbre 4 constituant l'élément pincé par la pince 15. L'arbre 4 comporte une partie de forme sensiblement parallélépipédique 24 présentant 2 faces de contact sur lesquelles s'exercent les forces statiques F de la pince flottante 15 du sous-ensemble entraînement relatif 21. La pince flottante 15 applique les forces F à l'aide de deux patins 16 et 16b, présentant des faces sensiblement planes qui autorisent le dépôt de couches de frottement 25 et 25b. Pour produire les forces F, les deux patins 16 et 16b sont pressés via des ressorts et des vis de réglages logées dans les trous 27, 27b situés dans le bâti 8 et permettent de régler facilement l'effort de précharge. Les patins 16 et 16b sont reliés au bâti 8 par des liaisons élastiques. Ces liaisons sont structurées de manière à être souples dans la direction de la force F, et raides dans les autres directions, en particulier dans la direction d'actionnement z. Par exemple ces liaisons élastiques sont composées respectivement d'articulations en flexion 17, 17b, de bras raides 18, 18b, et d'articulations en flexion 19, 19b. Cette configuration autorise des petites rotations des patins, ce qui permet une conformation à l'interface de contact. Pour raidir davantage le guidage des patins de la pince flottante, il est possible de faire appel à un guidage en parallélogramme des patins en doublant les bras et les articulations en flexion. L'arbre 4 est guidé par un palier 22, et l'arbre 23 est guidé par un autre palier 26. Le bâti 8 se raccorde aux paliers de guidage 22 et 26. Le fonctionnement de ce moteur est identique à celui de la figure 1.

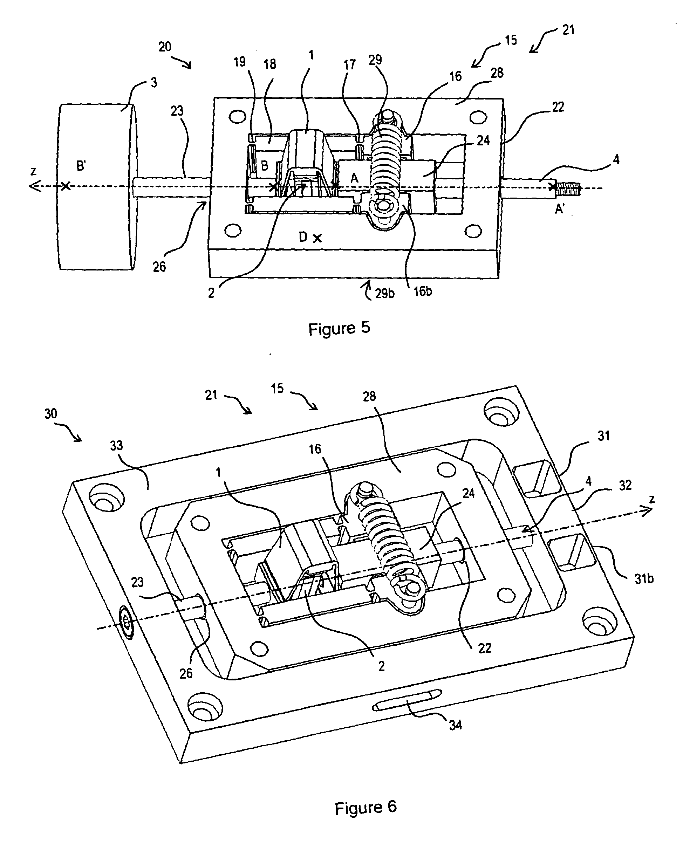

La figure 5 présente une variante de réalisation du moteur inertiel à amplificateur mécanique suivant la figure 4, différent par le deuxième sous ensemble entraînement relatif 21. La pince flottante 15 de ce sous ensemble applique les forces F à l'aide de deux patins 16 et 16b, pressés contre la zone parallélépipédique de l'arbre 4 via deux ressorts 29, 29b reliant directement les deux patins. Les patins 16 et 16b sont reliés au bâti 28 par des liaisons élastiques. Ces liaisons sont structurées de manière à être souples dans la direction de la force F et raides dans les autres directions, en particulier dans la direction d'actionnement z. Par exemple ces liaisons élastiques sont composées respectivement d'articulations en flexion 17, 17b, de bras raides 18, 18b, et d'articulations en flexion 19, 19b. Cette configuration a l'avantage d'équilibrer naturellement les efforts appliqués sur les deux patins et d'éliminer les efforts transmis sur les paliers de guidage 22 et 26.

La figure 6 présente une variante de réalisation du moteur inertiel à amplificateur mécanique suivant la figure 5, menant à une platine linéaire. Le mécanisme d'entraînement inertiel 30 met en oeuvre un amplificateur 1 contenant un élément piézoélectrique 2 et relié par un arbre 23 à une contre masse 33 présentant une forme en anneau rectangulaire comportant des trous d'interface. La contre masse 33 est aussi reliée à l'arbre 4 par la zone 32 via les moyens de guidages 31, 31 b. Les moyens de guidages 31, 31 b sont réalisés par des lames de flexion réalisant un guidage en parallélogramme de la zone 32, souple dans la direction z et raide perpendiculairement. Cette souplesse autorise les déformations de l'amplificateur 1 suivant l'axe z, nécessaires au fonctionnement du mécanisme inertiel 30. Cette configuration permet de reprendre la masse de la contre masse 33 et d'amener son centre de gravité sensiblement au centre de la platine. Ceci permet de réduire les couples produits par l'effet de vibrations sur la contre-masse dues par exemple à des vibrations externes dans les applications embarquées. Le sous ensemble entraînement relatif 21 est identique à celui de la figure 5. Le bâti 28 reprenant la pince flottante 15 et comportant des trous d'interface peut translater le long des arbres 4 et 23 grâce, respectivement, aux paliers de guidage 22 et 26. La forme annulaire du bâti 28 permet de placer son centre de gravité sensiblement au centre de la platine, procurant les avantages cités précédemment. Pour éviter la rotation relative du bâti 28 par rapport à la contre masse 33 autour de l'axe z, un pion de guidage fixé sur le bâti 28 peut glisser dans le trou oblong 34 en autorisant un mouvement relatif suivant z du bâti 28 par rapport à la contre-masse 33. Dans cette configuration, la charge à entraîner et la base de fixation de la platine peuvent être fixées via les trous d'interface respectivement sur le bâti 28 et la contre-masse 33 ou inversement. Le sous ensemble inertiel 30 peut se déplacer relativement aux sous ensembles entraînement relatif 21, comme pour le moteur présenté à la figure 1. L'ensemble des mouvements représentés sur la figure 2 peuvent être produits.

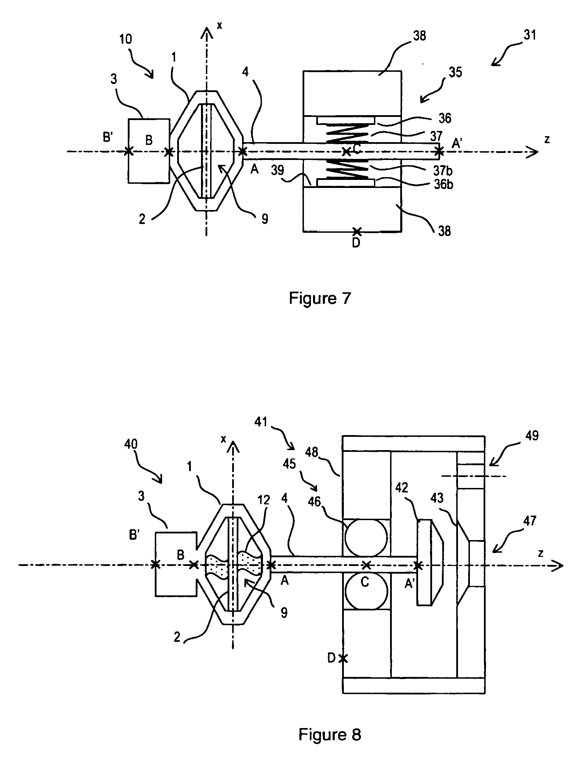

La figure 7 présente une autre variante du moteur de la figure 1 se différenciant par le sous ensemble entraînement relatif 31. La pince 35 formée du ressort de précharge 37 et du patin 36 est fixée sur l'arbre 4. Le bâti 38 est l'élément pincé par la pince 35 agissant sur la surface intérieure 39. Il peut glisser en translation relative par rapport aux patins 36, 36b et à l'arbre 4 lorsque le mode glissement - adhérence est mis en oeuvre à l'aide du sous ensemble inertiel amplifié 10. Des modes de réalisation plus détaillés peuvent se déduire de ce schéma et des figures précédentes. En particulier la pince 35 peut être réalisée avec des articulations ou sous forme symétrisées, comme les pinces 35 des figures 4 à 6.

Les différents moteurs et mécanismes linéaires précédents peuvent être utilisés pour réaliser des fonctions de positionnement précis avec blocage en position pour différentes applications d'instrumentation, d'optique, de mécanique de précision, de machines de fabrication, de distribution électrique tel que des interrupteurs ou des contacteurs et de fluidique tel que des électrovannes. Selon les besoins, ils sont commandés en boucle ouverte ou en boucle fermée. Dans ce cas un capteur de position est mis en oeuvre pour mesurer la course entre la charge et la masse mécanique.

Une application intégrée de type électrovanne linéaire est présentée en figure 8. Le sous-ensemble amplifié inertiel 40 est similaire au sous-système 10 de la figure 1. L'extrémité A' de l'arbre 4 est complété par un interface 42 de type soupape, adapté au siège de vanne 43. Le sous-ensemble entraînement relatif 41 est formé d'un bâti 48 formant le corps de vanne et d'une pince étanche 45 assurant à la fois la fonction de pince de l'arbre 4 et d'étanchéité de la vanne. Le corps de vanne comporte deux voies 47 et 49 permettant la circulation d'un fluide entre l'intérieur et l'extérieur du corps de vanne. Dans une forme de réalisation très simplifiée, la pince étanche 45 est constituée d'un joint torique 46 dont le diamètre intérieur à vide est inférieur à celui de l'arbre 4. En insérant l'arbre 4 dans le trou laissé par le joint 46, celui ci est comprimé et exerce une force F radiale de précharge, assurant ainsi la fonction de pince nécessaire au fonctionnement en glissement - adhérence. Le joint 46 assure aussi une première fonction grossière de guidage en translation suivant z de l'arbre 4. Si nécessaire, pour améliorer le guidage, un second guidage peut être ajouté du coté de la contre-masse comme sur la figure 3. Lorsque le sous-ensemble inertiel 40 est alimenté suivant le mode à longue course, la vanne peut soit être fermée soit être plus ou moins ouverte, permettant de réaliser une électrovanne proportionnelle. Cette application illustre d'une manière plus générale la possibilité suivant cette méthode de réaliser un arbre en translation traversant une paroi tout en gardant l'étanchéité. Cette fonction peut être utile par exemple pour la manipulation d'échantillons en enceinte médicale stérile.

Des moteurs rotatifs à un ou deux degrés de libertés peuvent être réalisés à partir d'un sous-ensemble inertiel amplifié et un sous-ensemble entraînement relatif assurant un guidage en rotation.

La figure 9 présente un premier moteur rotatif basé sur un sous-ensemble inertiel 50 agissant dans la direction z, similaire au sous-système 10 de la figure 1 et sur un sous-ensemble entraînement relatif 51. Le sous ensemble inertiel 50 est raccordé au sous-ensemble entraînement relatif 51 par un bras 56 fixé à la pince 55. La pince 55 assure l'effort de précharge élastique F sur un arbre de rotation 54 formant l'élément pincé, orienté suivant un axe y2 passant par M, perpendiculaire au plan de la figure 9. Dans le cas de la figure 9, la pince 55 est formée d'une partie coudée 57 s'enroulant partiellement autour de l'arbre 54, sur une zone de contact située autour du point C. La partie coudée 57 présente un diamètre intérieur à vide légèrement inférieur au diamètre de l'arbre 54 et présentant une élasticité radiale. Lorsque l'arbre est inséré dans la zone coudée 57 celle-ci se déforme ce qui génère l'effort de précharge radial donnant lieu à un couple de maintien. La forme coudée 57 assure de plus un guidage en rotation du sous ensemble inertiel amplifié 50 par rapport à l'arbre 54. Par des cycles d'excitation asymétrique de l'élément piézoélectrique 2, le sous-ensemble inertiel 50 exerce des forces d'impact suivant z vers le point A', qui produisent des forces tangentielles à la zone de contact se traduisant par des couples autour de l'arbre 54. Ces forces tangentielles ne sont pas nécessairement parallèles aux forces produites par le sous-ensemble inertiel. Grâce à la pince 55 et au mode de glissement adhérence, le sous ensemble inertiel amplifié 50 et particulier le point B' peut se déplacer en rotation autour de l'axe y2 sur une grande course angulaire voire sur un nombre illimité de tours. Les modes de positionnement angulaire fin et dynamique du point B' par rapport au point M sont possibles comme présentés à la figure 2.

Le concept présenté à la figure 9 permet aussi de réaliser un moteur rotule. Dans ce cas la pièce 54 est une pièce présentant une surface sphérique dans ses zones de contacts avec la zone coudée 56 de la pince 55. Un deuxième sous-ensemble inertiel amplifié de structure identique au sous-ensemble 50 est fixé vers le point A' et agit dans une direction z' orthogonale au plan formé par les axes x2 et z. Cette structure permet de produire deux degrés actifs de liberté en rotation autour du point M, au centre de la pièce 54. Pour obtenir un moteur rotule à trois degrés de libertés en rotation, il suffit de faire intervenir trois sous-ensemble inertiel amplifiés ou plus sur le bras 56 suivant des directions situées dans un même plan perpendiculaire au l'axe x2 passant par A' mais non concourantes au point A'.

La figure 10 présente une forme de réalisation particulière de moteur rotatif basé sur un sous-ensemble inertiel 60 agissant dans la direction z et un sous-ensemble entraînement relatif 61.

Le sous-ensemble inertiel 60 comporte un amplificateur mécanique 1 comportant un élément piézoélectrique 2 agissant suivant l'axe x et maintenu en précontrainte à l'intérieur de l'amplificateur à l'aide de cales de rattrapage de jeu 62. Les interfaces 63, 64 de l'amplificateur 1 sont respectivement fixés, au niveau de ses points d'actionnement A1 et A2, aux bras 65, 66, eux même fixés aux bras 67,68. Les bras 67, 68 sont raccordés aux interfaces de fixation du moteur 69, 70 par le biais de liaisons élastiques 71, 71 b, 72, et 72b souples dans la direction z.

Le sous-ensemble entraînement relatif 61 comporte la pince 75 fixée sur l'arbre tournant 79 et un disque statorique 76 formant l'élément pincé. La pince 75 comporte un rotor 78 revêtu d'une couche de frottement 77 et fixé solidairement à l'arbre 79. L'arbre 79 traverse le disque 76 et permet par l'intermédiaire d'un écrou 80, d'un ressort 81 et d'un roulement 82 d'exercer un effort de précharge F entre le rotor 78 et le disque statorique 76. L'écrou 80 permet le réglage de la précharge. Le roulement 82 permet la rotation de la pince 75 par rapport au disque statorique 76. Le disque statorique 76 est attaché aux bras 67 et 68 du sous-ensemble inertiel 60 par des liaisons 74 et 74b, raides dans les directions z1 et z2 et souples dans les autres directions.

Hors alimentation, la force de précharge F maintient en blocage le rotor 78. Par des cycles d'excitation asymétrique de l'élément piézoélectrique 2, le sous-ensemble inertiel 60 exerce des forces dynamiques suivant z. Les forces et déplacements produits par l'amplificateur en A1 et A2 s'exercent dans des directions opposées. Par raison de symétrie le point B0 est fixe et joue le rôle de contre-masse. Les déplacements de l'amplificateur 1 opposés produits en A1 et A2 sont transmis par l'intermédiaire des bras 65,66,67,68 aux liaisons 74 et 74b. Ces liaisons sont entraînées en déplacement suivant les axes z1 et z2 suivant des sens opposés, ce qui produit un couple autour de l'arbre 79. Les modes de positionnement angulaire fin et dynamique de l'arbre 79 sont aussi possibles comme présentés à la figure 2.

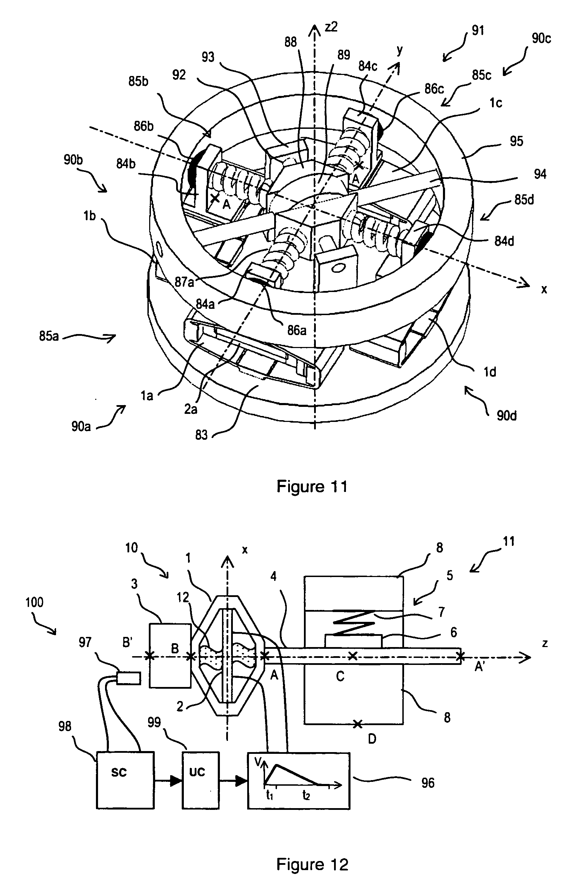

La figure 11 présente une forme de réalisation particulière de moteur rotatif rotule basé sur quatre sous-ensembles inertiels identiques 90a, 90b, 90c, 90d, et un sous-ensemble entraînement relatif 91. Par exemple le sous-ensemble 90a comprend un amplificateur mécanique 1 a et une céramique 2a. Il est fixé au socle 83, jouant le rôle de contre-masse. Le sous ensemble 90a agit sur le sous ensemble entraînement relatif 91 par la patte 84a. Les trois autres sous-ensembles inertiels 90b, 90c et 90d présentent les mêmes structures que le sous ensemble 90a mais sont simplement répartis à 90° autour de l'axe z2 passant par le centre du mécanisme. Le sous-ensemble entraînement relatif 91 comprend des pinces identiques 85a, 85b, 85c et 85d agissant par l'intérieur sur la coupe 95 formant l'élément pincé. La coupe 95 est représentée sous forme d'un anneau pour rendre la figure 11 plus compréhensible, mais sera préférentiellement en forme de coupe de surface interne sphérique. La charge à entraîner est fixée sur sa surface externe. La pince 85a est formée d'un ressort 87a et de la patte 84a sur laquelle est fixée une pastille de frottement 86a, en contact avec la coupe 95. Les pinces 85a, 85b,85c,85d sont raccordées au socle 83 par le biais du support 88 et d'une liaison cardan. Cette pièce 88 est traversante pour permettre de passage de l'arbre de rotation 92, guidé par le palier 93. L'arbre 92 est fixé au moyeu 89 lequel est solidaire de l'arbre 94 attaché à la coupe 95. Le moyeu 88 est guidé en rotation par le support 88. Les pièces 88, 89, 92, 93, 94 forment un cardan qui assure le guidage en rotation de la coupe 95 autour des axes x et y perpendiculaires à l'axe z2. Dans cette structure, les sous-ensembles inertiels sont utilisés en push-pull. Par exemple pour provoquer un pas en rotation de la coupe 95 autour de l'axe x, les sous-ensembles inertiels amplifiés 90a et 90c sont excités de manière à produire des déplacements respectivement des pattes 84a et 84c de sens opposés et exploiter le mode de glissement adhérence des pinces 85a et 85c. De la même manière, les sous-ensembles 90b et 90d permettent de réaliser un pas rotatif de la coupe 95 autour de l'axe y. Ces rotations peuvent être combinées pour produire des grandes courses en rotation. Les modes de positionnement angulaire fin et dynamique de la coupe 95 par rapport au socle 83 sont possibles comme présenté à la figure 2.

La figure 12 représente un système comprenant un mécanisme d'entraînement à base d'un sous-ensemble amplifié inertiel 10 et d'un sous-ensemble entraînement relatif 11 ainsi qu'un circuit électronique 100 incluant une alimentation électrique 96, un capteur de position 97, une électronique de conditionnement du capteur 98 et une électronique de contrôle 99. L'utilisation d'un circuit électronique 100 est présenté pour le cas de la figure 1 mais est applicable aussi bien aux moteurs linéaires que rotatifs présentés sur les figures 3 à 11.

Le circuit électronique 100 est destiné à alimenter chaque élément piézoactif du sous ensemble amplifié inertiel 10. Dans une forme de réalisation plus complexe, il permet de plus de contrôler les déplacements relatifs entre deux points choisis du système. L'alimentation électrique 96 permet de générer les tensions et courants nécessaires à l'élément piézoactif 2 placé dans l'amplificateur 1 du premier sous ensemble 10. Elle permet en particulier de générer des cycles d'excitation électriques asymétriques du mode M1 dont chaque période est formée d'un temps de commutation court t₁ et d'un temps de commutation long t₂ afin de produire une alternance de déformations rapides et lentes de l'amplificateur mécanique 1. Le capteur de position 97 pourra être un capteur sans contact par exemple de type inductif, capacitif ou optique. Dans une forme de réalisation limitée, le capteur 97 peut être une jauge de déformation. Les signaux du capteur 97 sont conditionnés par une électronique de conditionnement 98. Une électronique de contrôle 99 récupère les informations de position du conditionneur 98 et les consignes données par l'utilisateur pour commander l'alimentation 96. Dans une forme particulière de réalisation intéressante lorsque la charge est fixée sur la contre masse 3, le capteur de position 97 peut être un capteur sans contact raccordé au bâti 8 et placé en vis à vis de la contre masse 3. Dans ce cas, tous les modes M1, M2 et M3 de déplacement présentés à la figure 2 sont possibles et peuvent être mesurés par le capteur 97. L'électronique de contrôle 99 peut alors être utilisée pour réaliser un asservissement en position de la charge fixée à la contre masse.

Dans une forme de réalisation particulière du circuit électronique 100, la vitesse du moteur dans le mode M1 est augmentée par synchronisation de la commutation rapide de chaque nouveau cycle d'excitation avec un maximum d'amplitude de la vibration résiduelle du sous ensemble inertiel 10. Dans ce cas, la vitesse instantanée acquise par le point d'inertie B contribue au glissement de la pince 5 et permet de maximiser l'amplitude du pas. De plus, il n'est pas nécessaire d'attendre la fin de la vibration résiduelle pour engager un nouveau cycle d'excitation. La durée t₂ et donc la durée des cycles d'excitation Tₑ = t₁+t₂ peuvent ainsi être réduites. La fréquence d'excitation fₑ = 1/Tₑ de réalisation de chaque pas est donc augmentée. Les augmentations de l'amplitude du pas et de la fréquence d'excitation réalisées par synchronisation augmentent ainsi notablement la vitesse moyenne du moteur.

La synchronisation est d'autant plus facile à réaliser que la période T de la vibration résiduelle du sous ensemble inertiel 10 est grande grâce à l'amplification α due à l'amplificateur 1. Elle peut se faire par réglage de la fréquence d'excitation fₑ. Elle peut aussi se faire via l'électronique de contrôle 99 pour déclencher l'ordre de commutation rapide à l'alimentation 96, à l'aide d'une mesure de la vibration résiduelle du sous ensemble inertiel 10. Cette mesure peut être réalisée directement par le capteur de position 97, par exemple au point d'inertie B, et le conditionneur 98. Elle peut aussi être réalisée indirectement par l'analyse du courant électrique de l'élément piézoactif 2, ce courant présentant une image de la vibration résiduelle du sous ensemble inertiel 10.

L'élément piézoactif 2 est de préférence une céramique piézoélectrique multicouche de dimension 5mm x 5mm x 20mm offrant une course à vide de 20µm sous V=150V et une capacité de C=1,6µF. L'amplificateur mécanique présente un rapport d'amplification voisin de α = 4. Grâce à cette amplification et une contre masse de 100gr, la fréquence propre se situe autour de 0,6kHz et la période propre T=1.6ms. La condition à réaliser pour le temps de commutation rapide t₁ qui doit être faible devant la période T est ainsi facile à réaliser, par exemple en prenant t₁ = 200µs. Dans ces conditions, compte tenu de la capacité C et de la tension V, un courant d'alimentation lors de la commutation rapide I=1A est suffisant pour provoquer des pas de l'ordre de 15µm et obtenir une vitesse variant de 2mm/s à 10mm/s si une synchronisation est mise en oeuvre. Ce courant I relativement faible permet de réaliser des circuits électroniques 100 miniaturisés, peu gourmands et de faible coût. Par ailleurs le rapport d'amplification voisin de α = 4 permet en pratique d'obtenir une course statique uₘₐₓ = 80µm assez élevée pour être exploitable pour réaliser le mode de positionnement fin dans bon nombre d'applications de précision.

## Revendications

1. Système de positionnement fin comprenant :
- un premier sous-ensemble inertiel (10, 20, 30, 40, 50, 60, 90abcd) incluant au moins un élément piézoactif (2), et au moins un point d'inertie (B, B', B0) et capable de produire en un point d'actionnement (A, A1, A2) des forces d'impact et des déplacements dans une direction d'actionnement (z),
- un deuxième sous-ensemble entraînement relatif (11, 21, 31, 41, 51, 61, 91) incluant au moins un élément entraîneur et un élément entraîné, l'un des deux éléments étant fixé au premier sous-ensemble inertiel (10, 20, 30, 40, 50, 60, 90abcd) par le point d'actionnement (A, A1, A2),
- l'élément entraîneur et l'élément entraîné étant conformés selon au moins une pince (5, 15, 35, 45, 55, 75, 85abcd) et un élément pincé (4, 24, 54, 76, 95) pour autoriser un mouvement de glissement adhérence,
**caractérisé en ce que** :
- le système comporte un circuit électronique (100) permettant d'alimenter chaque élément piézoactif (2) du premier sous-ensemble inertiel suivant des cycles d'excitation prédéterminés,
- le premier sous-ensemble inertiel comporte un amplificateur mécanique (1) amplifiant les déplacements de l'élément piézoactif (2),
- le point d'actionnement (A, A1, A2) est situé sur l'amplificateur mécanique (2) sans venir en engagement direct avec l'élément piézoactif (2),

2. Système selon la revendication 1, **caractérisé en ce que** l'élément piézoactif (2) s'étend orthogonalement par rapport à la direction de déplacement du premier sous-ensemble inertiel, et que l'amplificateur mécanique (1) est formé par une coquille en forme approximativement de losange, dont le grand axe intérieur contient l'élément piézo actif (2) sous précontrainte, et dont les extrémités actives sont situées sur le petit axe.

3. Système selon la revendication 1, **caractérisé en ce que** le premier sous-ensemble mécanisme inertiel (10, 20, 30, 40, 50, 60, 90abcd) comporte une contre masse (3, 33, 83) du côté du point d'inertie (B).

4. Système selon la revendication 3, **caractérisé en ce que** l'amplificateur mécanique (1) et la contre-masse (3, 33, 83) forment une pièce monolithique

5. Système selon la revendication 1, **caractérisé en ce que** le deuxième sous-ensemble entraînement relatif (11, 21, 31, 41) comporte un arbre (4, 24) autorisant un mouvement de translation relatif par rapport à la pince (5, 15, 35).

6. Système selon la revendication 5, **caractérisé en ce que** le point d'inertie (B) de l'amplificateur mécanique (1) ou son prolongement (B', B") est guidé en translation.

7. Système selon la revendication 6, **caractérisé en ce que** le guidage du point d'inertie (B) est réalisé par un arbre (13, 23) glissant dans un palier (14, 26).

8. Système selon la revendication 5, **caractérisé en ce que** la contre-masse (33) est fixée à l'arbre (4) par une liaison (31, 31 b, 32) souple suivant la direction d'actionnement (2), et rigide dans les autres directions.

9. Système selon la revendication 5, **caractérisé en ce que** la pince (15) est réalisée par au moins un patin (6, 6b, 16, 16b, 36, 36b) pressé sur l'élément pincé (4, 24) par des ressorts (7, 27,27b) s'appuyant sur le bâti (8).

10. Système selon la revendication 5, **caractérisé en ce que** la pince (15) comporte deux patins (16, 16b) pressés sur l'élément pincé (24) et reliés entre eux par des ressorts (29).

11. Système selon les revendications 5, **caractérisé en ce que** la pince (35) est réalisée par au moins un patin (36, 36b) pressé sur le bâti (38) par des ressorts (37, 37b) fixé à l'arbre (4).

12. Système selon l'une des revendications 9 à 11, **caractérisé en ce que** les patins (16, 16b, 36, 36b) sont guidés par des liaisons élastiques raides suivant l'axe z, et par des liaisons souples dans les autres directions.

13. Système selon la revendication 5, **caractérisé en ce que** la pince (41) est réalisée par un joint souple pressant (46).

14. Système selon la revendication 13, **caractérisé en ce que** le joint (46) assure en plus une fonction d'étanchéïté.

15. Système selon la revendication 5 à 14, **caractérisé en ce que** l'arbre (4) est utilisé pour l'ouverture et la fermeture d'une vanne.

16. Système selon l'une des revendications 1 à 4, **caractérisé en ce que** le deuxième sous-ensemble entraînement relatif (51, 61, 91) comporte au moins un organe de guidage (54,57,79,82,88,89,92,93), autorisant un mouvement de rotation relatif, soit entre un élément entraîneur et un élément entraîné, soit entre une pince (55, 75, 85abcd) et un élément pincé (54,76,95).

17. Système selon la revendication 16, **caractérisé en ce que** le premier sous-ensemble inertiel (50) coopère avec un bras (56) guidé par un arbre (54) pour réaliser un moteur rotatif.

18. Système selon la revendication 16, **caractérisé en ce que** au moins un sous-ensemble inertiel (50) agit sur un bras (56) guidé par une rotule (54) pour réaliser un moteur rotule.

19. Système selon la revendication 16, **caractérisé en ce que** le premier sous-ensemble inertiel (60) exerce une force d'actionnement opposée sur chacun des bras (67, 68) pour produire un couple sur un moyeu (76) fixé au bras (67, 68) par des liaisons souples (74, 74b).

20. Système selon la revendication 16, **caractérisé en ce qu'**une pluralité de sous-ensembles inertiels (90abcd) exercent leurs forces d'actionnement tangentiellement à la surface d'une pièce en forme d'anneau ou de coupe (95) pour réaliser un moteur rotule à deux degrés de liberté.

21. Système selon la revendication 1, **caractérisé en ce que** le circuit électronique (100) des éléments piézoactifs (1, 1abcd) engendre des cycles d'excitation asymétriques formés de commutations rapides et de commutations lentes pour permettre un mode (M1) de positionnement grande course.

22. Système selon la revendication 1, **caractérisé en ce que** le circuit électronique (100) des éléments piézoactifs (1, 1abcd) délivre des tensions continues réglables pour permettre un mode (M2) de positionnement fin.

23. Système selon la revendication 1, **caractérisé en ce que** le circuit électronique (100) des éléments piézoactifs (1, 1abcd) produit des tensions variables pour permettre un mode (M3) de positionnement dynamique.

24. Système selon l'une des revendications 21 à 23, **caractérisé en ce que** le circuit électronique (100) comprend une alimentation (96), un capteur de position (97), un conditionneur (98) et un contrôleur (99) permettant l'asservissement en position relative de la charge.

25. Système selon l'une des revendications 1 à 24, **caractérisé en ce que** l'amplificateur mécanique (1) comporte des zones équipées de matériaux amortissants (12).

26. Système selon l'une des revendications 1 à 25, **caractérisé en ce que** l'alimentation (96) comporte des moyens de commutation rapide du cycle d'excitation en synchronisation avec un maximum de la vibration résiduelle du sous ensemble inertiel (10).

27. Système selon la revendication 26, **caractérisé en ce que** le circuit électronique (100) comporte des moyens de mesure de la vibration résiduelle du sous ensemble inertiel (10) pour réaliser la synchronisation.

## Claims

1. A fine positioning system comprising:
- a first inertial sub-assembly (10, 20, 30, 40, 50, 60, 90abcd) including at least one piezoactive element (2) and at least one inertia point (B, B', B"), and able to produce impact forces and movements at an actuating point (A, A1, A2) in an actuating direction (z),
- a second relative drive sub-assembly (11, 21, 31, 41, 51, 61, 91) including at least one drive member and one driven member, one of the two members being fixed to the first inertial sub-assembly (10, 20, 30, 40, 50, 60, 90abcd) via the actuating point (A, A1, A2),
- the drive member and the driven member being in the form of at least one clamp (5, 15, 35, 45, 55, 75, 85abcd) and one clamped element (4, 24, 54, 76, 95) to allow a sliding - adhesion movement,
**characterized in that**:
- the system comprises an electronic circuit (100) for supplying each piezoactive element (2) of the first inertial sub-assembly according to predefined excitation cycles,
- the first inertial sub-assembly comprises a mechanical amplifier (1) amplifying the movements of the piezoactive element (2),
- the actuating point (A, A1, A2) is situated on the mechanical amplifier (1), without coming into direct engagement with the piezoactive element (2).

2. The system according to claim 1, **characterized in that** the piezoactive element (2) extends orthogonally with respect to the direction of movement of the first inertial sub-assembly, and that the mechanical amplifier (1) is formed by a shell substantially in the shape of a rhomb, the internal large axis whereof contains the pre-stressed piezoactive element (2), and the active ends whereof are situated on the small axis.

3. The system according to claim 1, **characterized in that** the first inertial mechanism sub-assembly (10, 20, 30, 40, 50, 60, 90abcd) comprises a countermass (3, 33, 83) on the side where the inertia point (B) is situated.

4. The system according to claim 3, **characterized in that** the mechanical amplifier (1) and the countermass (3, 33, 83) form a monolithic part.

5. The system according to claim 1, **characterized in that** the second relative drive sub-assembly (11, 21, 31, 41) comprises a shaft (4, 24) allowing a relative translational movement with respect to the clamp (5, 15, 35).

6. The system according to claim 5, **characterized in that** the inertia point (B) of the mechanical amplifier (1) or its extension (B', B") is guided in translation.

7. The system according to claim 6, **characterized in that** guiding of the inertia point (B) is performed by a shaft (13, 23) sliding in a bearing (14, 26).

8. The system according to claim 5, **characterized in that** the countermass (33) is fixed to the shaft (4) by a link (31, 31 b, 32) that is flexible along the actuating direction (z), and rigid in the other directions.

9. The system according to claim 5, **characterized in that** the clamp (15) is achieved by at least one pad (6, 6b, 16, 16b, 36, 36b) pressed onto the clamped member (4, 24) by springs (7, 27, 27b) pressing on the frame (8).

10. The system according to claim 5, **characterized in that** the clamp (15) comprises two pads (16, 16b) pressed onto the clamped member (24) and connected to one another by springs (29).

11. The system according to claim 5, **characterized in that** the clamp (5) is achieved by at least one pad (36, 36b) pressed onto the frame (38) by springs (37, 37b) fixed to the shaft (4).

12. The system according to one of claims 9 to 11, **characterized in that** the pads (16, 16b, 36, 36b) are guided by elastic connecting links that are stiff in the direction of the z-axis and by flexible links in the other directions.

13. The system according to claim 5, **characterized in that** the clamp (41) is achieved by a pressing flexible seal (46).

14. The system according to claim 13, **characterized in that** the seal (46) further performs a tightness function.

15. The system according to one of claims 5 to 14, **characterized in that** the shaft (4) is used for opening and closing a valve.

16. The system according to one of claims 1 to 4, **characterized in that** the second relative drive sub-assembly (51, 61, 91) comprises at least one guide means (54, 57, 79, 82, 88, 89, 92, 93) allowing a relative rotational movement either between a drive member and a driven member or between a clamp (55, 75, 85abcd) and a clamped member (54, 76, 95).

17. The system according to claim 16, **characterized in that** the first inertial sub-assembly (50) operates in collaboration with an arm (56) guided by a shaft (54) to achieve a rotary motor.

18. The system according to claim 16, **characterized in that** at least inertial sub-assembly (50) acts on an arm (56) guided by a swivel-pin (54) to achieve a spherical-drive motor.

19. The system according to claim 16, **characterized in that** the first inertial sub-assembly (60) exerts an opposite actuating force on each of the arms (67, 68) to produce a torque on a hub (76) fixed to the arm (67, 68) by flexible links (74, 74b).

20. The system according to claim 16, **characterized in that** a plurality of inertial sub-assemblies (90abcd) exert their actuating forces tangentially to the surface of a part in the shape of a ring or a cup (95) to achieve a spherical-drive motor with two degrees of freedom.

21. The system according to claim 1, **characterized in that** the electronic circuit (100) of the piezoactive elements (2, 2abcd) generate asymmetric excitation cycles formed by fast switchings and slow switchings to enable a long-stroke positioning mode (M1).

22. The system according to claim 1, **characterized in that** the electronic circuit (100) of the piezoactive elements (2, 2abcd) delivers adjustable DC voltages to enable a fine positioning mode (M2).

23. The system according to claim 1, **characterized in that** the electronic circuit (100) of the piezoactive elements (2, 2abcd) produces variable voltages to enable a dynamic positioning mode (M3).

24. The system according to one of claims 21 to 23, **characterized in that** the electronic circuit (100) comprises a power supply (96), a position sensor (97), a conditioner (98) and a controller (99) enabling lock-loop control in relative position of the load.

25. The system according to one of claims 1 to 24, **characterized in that** the mechanical amplifier (1) comprises areas equipped with damping materials (12).

26. The system according to one of claims 1 to 25, **characterized in that** the mechanical power supply (96) comprises fast switching means of the excitation cycle in synchronization with a maximum of residual vibration of the inertial sub-assembly (10).

27. The system according to claim 26, **characterized in that** the electronic circuit (100) comprises means for measuring the residual vibration of the inertial sub-assembly (10) to perform synchronization.

## Patentansprüche

1. System zur Feineinstellung, das umfasst:
- ein erstes Trägheits-Teilsystem (10, 20, 30, 40, 50, 60, 90abcd), das mindestens ein piezoaktives Element (2) und mindestens einen Trägheitspunkt (B, B', B0) einschließt und geeignet ist, an einem Aktivierungspunkt (A, A1, A2) Stoßkräfte und Bewegungen in einer Betätigungsrichtung (z) zu erzeugen,
- ein zweites Teilsystem zum relativen Antrieb (11, 21, 31, 41, 51, 61, 91), das mindestens ein Antriebs- und ein Abtriebselement einschließt, wobei eines der beiden Elemente über den Aktivierungspunkt (A, A1, A2) am ersten Trägheits-Teilsystem (10, 20, 30, 40, 50, 60, 90abcd ) angebracht ist,
- wobei das Antriebs- und das Abtriebselement entsprechend mindestens einer Klammer (5, 15, 35, 45, 55, 75, 85abcd) und einem geklammerten Element (4, 24, 54, 76, 95) geformt sind, um eine Gleit-Haft-Bewegung zu ermöglichen,
**dadurch gekennzeichnet, dass**
- das System eine Elektronikschaltung (100) umfasst, die die Versorgung jedes piezoaktiven Elements (2) des ersten Trägheits-Teilsystems gemäß vorbestimmten Erregungszyklen ermöglicht,
- das erste Trägheits-Teilsystem einen mechanischen Verstärker (1) umfasst, der die Bewegungen des piezoaktiven Elements (2) verstärkt,
- sich der Aktivierungspunkt (A, A1, A2) am mechanischen Verstärker (2) befindet, ohne direkt in das piezoaktive Element (2) einzugreifen.

2. System nach Anspruch 1, **dadurch gekennzeichnet, dass** sich das piezoaktive Element (2) orthogonal bezüglich der Bewegungsrichtung des ersten Trägheits-Teilsystems erstreckt, und dass der mechanische Verstärker (1) von einer Schale gebildet wird, die annähernd die Form einer Raute aufweist, deren innere Längsachse das piezoaktive Element (2) vorgespannt hält, und deren aktive Enden sich auf der Querachse befinden.

3. System nach Anspruch 1, **dadurch gekennzeichnet, dass** das erste Trägheits-Teilsystem (10, 20, 30, 40, 50, 60, 90abcd) eine Gegenmasse (3, 33, 83) auf der Seite des Trägheitspunkts (B) umfasst.

4. System nach Anspruch 3, **dadurch gekennzeichnet, dass** der mechanische Verstärker (1) und die Gegenmasse (3, 33, 83) ein monolithisches Teil bilden.

5. System nach Anspruch 1, **dadurch gekennzeichnet, dass** das zweite Teilsystem zum relativen Antrieb (11, 21, 31, 41) eine Welle (4, 24) umfasst, die eine relative Translationsbewegung gegenüber der Klammer (5, 15, 35) erlaubt.

6. System nach Anspruch 5, **dadurch gekennzeichnet, dass** der Trägheitspunkt (B) des mechanischen Verstärkers (1) oder dessen Verlängerung (B', B") translationsgeführt ist.

7. System nach Anspruch 6, **dadurch gekennzeichnet, dass** die Führung des Trägheitspunkts (B) mittels einer Welle (13, 23) erfolgt, die in einem Lager (14, 26) gleitet.

8. System nach Anspruch 5, **dadurch gekennzeichnet, dass** die Gegenmasse (33) an der Welle (4) mittels einer Verbindung (31, 31b, 32) befestigt ist, die in der Betätigungsrichtung (z) flexibel und in den anderen Richtungen starr ist.

9. System nach Anspruch 5, **dadurch gekennzeichnet, dass** die Klammer (15) von mindestens einer Backe (6, 6b, 16, 16b, 36, 36b) gebildet wird, die auf das geklammerte Element (4, 24) mittels Federn (7, 27, 27b) gedrückt wird, die am Rahmen (8) abgestützt sind.

10. System nach Anspruch 5, **dadurch gekennzeichnet, dass** die Klammer (15) zwei Backen (16, 16b) umfasst, die an das geklammerte Element (24) gedrückt werden und miteinander über Federn (29) verbunden sind.

11. System nach Anspruch 5, **dadurch gekennzeichnet, dass** die Klammer (35) von mindestens einer Backe (36, 36b) gebildet wird, die mittels an der Welle (4) befestigter Federn (37, 37b) an den Rahmen (38) gepresst wird.

12. System nach einem der Ansprüche 9 bis 11, **dadurch gekennzeichnet, dass** die Backen (16, 16b, 36, 36b) mittels starrer elastischer Verbindungen gemäß der Achse z und mittels flexibler Verbindungen in den anderen Richtungen geführt werden.

13. System nach Anspruch 5, **dadurch gekennzeichnet, dass** die Klammer (41) von einer flexiblen Druckdichtung gebildet wird.

14. System nach Anspruch 13, **dadurch gekennzeichnet, dass** die Dichtung (46) ferner eine Abdichtfunktion hat.

15. System nach Anspruch 5 bis 14, **dadurch gekennzeichnet, dass** die Welle (4) zum Öffnen und Schließen eines Ventils verwendet wird.

16. System nach einem der Ansprüche 1 bis 4, **dadurch gekennzeichnet, dass** das zweite relative Antriebs-Teilsystem (51, 61, 91) mindestens eine Führungseinrichtung (54, 57, 79, 82, 88, 89, 92, 93) umfasst, die eine relative Drehbewegung erlaubt zwischen entweder einem Antriebselement und einem Abtriebselement oder zwischen einer Klammer (55, 75, 85abcd) und einem geklammerten Element (54,76,95).

17. System nach Anspruch 16, **dadurch gekennzeichnet, dass** das erste Trägheits-Teilsystem (50) mit einem von einer Welle (54) geführten Arm (56) zusammenwirkt, um einen Drehmotor zu bilden.

18. System nach Anspruch 16, **dadurch gekennzeichnet, dass** mindestens ein Trägheits-Teilsystem (50) auf einen von einem Kugelgelenk (54) geführten Arm (56) wirkt, um einen Antrieb mit Kugelgelenk zu bilden.

19. System nach Anspruch 16, **dadurch gekennzeichnet, dass** das erste Trägheits-Teilsystem (60) eine entgegengesetzte Aktivierungskraft auf jeden Arm (67, 68) ausübt, um ein Moment auf einer Nabe (76) zu erzeugen, die an dem Arm (67, 68) mittels flexibler Verbindungen (74, 74b) befestigt ist.

20. System nach Anspruch 16, **dadurch gekennzeichnet**, dasseine Mehrzahl von Trägheits-Teilsystemen (90abcd) ihre Aktivierungskräfte tangential zur Oberfläche eines ring- oder schalenförmigen Teils (95) ausüben, um einen Antrieb mit Kugelgelenk mit zwei Freiheitsstufen zu bilden.

21. System nach Anspruch 1, **dadurch gekennzeichnet, dass** die Elektronikschaltung (100) der piezoaktiven Elemente (1, 1abcd) unsymmetrische Erregungszyklen auslöst, die aus schnellen und langsamen Schaltvorgängen bestehen, um einen Großhub-Positionierungsmodus (M1) zu ermöglichen.

22. System nach Anspruch 1, **dadurch gekennzeichnet, dass** die Elektronikschaltung (100) der piezoaktiven Elemente (1, 1abcd) Gleichspannungen erzeugt, die einstellbar sind, um einen Feineinstellungsmodus (M2) zu ermöglichen.

23. System nach Anspruch 1, **dadurch gekennzeichnet, dass** die Elektronikschaltung (100) der piezoaktiven Elemente (1, 1 abcd) Wechselspannungen erzeugt, um einen Modus (M2) der dynamischen Positionierung zu ermöglichen.

24. System nach einem der Ansprüche 21 bis 23, **dadurch gekennzeichnet, dass** die Elektronikschaltung (100) eine Stromzufuhr (96), einen Positionsmesser (97), einen Regler (98) und ein Steuergerät (99) umfasst, die die relative Positionssteuerung der Ladung erlauben.

25. System nach einem der Ansprüche 1 bis 24, **dadurch gekennzeichnet, dass** der mechanische Verstärker (1) Bereiche umfasst, die mit dämpfenden Materialien (12) versehen sind.

26. System nach einem der Ansprüche 1 bis 25, **dadurch gekennzeichnet, dass** die Stromversorgung (96) Mittel zum schnellen Umstellen des Erregungszyklus unter Abstimmung mit einem Maximum der Restschwingung des Trägheits-Teilsystems (10) umfasst.

27. System nach Anspruch 26, **dadurch gekennzeichnet, dass** die Elektronikschaltung (100) Mittel zum Messen der Restschwingung des Trägheits-Teilsystems (10) umfasst, um die Synchronisierung vorzunehmen.
